# EUROPEAN PATENT APPLICATION

(11) **EP 4 555 887 A1**
(43) Date of publication of application: **21.05.2025**
(21) Application number: 23839772.3
(22) Date of filing: 16.05.2023
(51) Int. Cl.: A42B 3/08, F16H 19/04

(54) **HELMET FITTING SYSTEM AND MANUFACTURING METHOD THEREFOR**

(30) Priority: 12.07.2022 KR 20220085757
(71) Applicant: HJC Corp., Yongin-si, Gyeonggi-do 17127 (KR)
(72) Inventor: KIM, Sung Joo, Yongin-si Gyeonggi-do 16877 (KR)
(74) Representative: V.O.
(86) International application number: PCT/KR2023/006573
(87) International publication number: WO 2024/014678

(57) **Abstract**

The present disclosure relates to a helmet fitting system and a manufacturing method therefor. The helmet fitting system according to the present disclosure includes a band (100) having one end fixed to a certain point (X) of a helmet (10), a fitting unit (200) connected to the band (100) and configured to provide an elastic force to the back of a wearer's head, and an adjustment means (300) configured to adjust the elastic force of the fitting unit (200).

## Description

### [Technical Field]

The present disclosure relates to a helmet fitting system and a manufacturing method therefor.

### [Background Art]

Helmets are designed to protect wearers' heads, and there are bicycle helmets, ski helmets, or motorcycle helmets according to purposes.

A helmet generally has a structure in which chin straps are provided on both sides to be fastened and a band is fastened to the back to prevent the helmet from shaking, thereby improving the feeling of fitting.

A helmet according to the prior art includes a dial for controlling the length of a band. Accordingly, the band may be tightened when the dial is turned in one direction, and the band may be loosened when the dial is turned in other direction. However, the helmet according to the prior art has the inconvenience of having to tighten or loosen the band by turning the dial whenever the helmet is put on or taken off.

### [Related Literature]

### [Patent literature]

(Patent literature 1) KR20-0456037 Y1

### [Disclosure]

### [Technical Problem]

The present disclosure aims to solve the problems of the prior art, and one aspect of the present disclosure relates to a helmet fitting system and a manufacturing method therefor which may eliminate the need for separate manipulation whenever a helmet is put on or taken off by providing a fitting unit configured to provide an elastic force toward the back of a wearer's head and may provide various elastic forces (pressures) desired by the wearer by providing an adjustment means configured to adjust the elastic force of the fitting unit.

### [Technical Solution]

A helmet fitting system according to an embodiment of the present discourse includes a band having one end fixed to a certain point of a helmet, a fitting unit connected to the band and configured to provide an elastic force to the back of a wearer's head, and an adjustment means configured to adjust the elastic force of the fitting unit.

Also, in the helmet fitting system according to an embodiment of the present discourse, the fitting unit includes a fitting means connected to the band and configured to provide an elastic force to the band, and a contact member arranged so that the fitting means is movable, the contact member being in contact with the back of the wearer's head, wherein the adjustment means is configured to change a position of the fitting means with respect to the certain point.

Also, in the helmet fitting system according to an embodiment of the present discourse, when the adjustment means moves the fitting means away from the certain point, the elastic force of the fitting means increases, and when the adjustment means moves the fitting means closer to the certain point, the elastic force of the fitting means decreases.

Also, in the helmet fitting system according to an embodiment of the present discourse, the adjustment means is gear-coupled to the fitting means.

Also, in the helmet fitting system according to an embodiment of the present discourse, a pinion gear is formed on the adjustment means, and a rack gear coupled to the pinion gear is formed on the fitting means.

Also, in the helmet fitting system according to an embodiment of the present discourse, the adjustment means is coupled to the contact member.

Also, in the helmet fitting system according to an embodiment of the present discourse, the fitting means includes an elastic means connected to the band.

Also, in the helmet fitting system according to an embodiment of the present discourse, when one end of the elastic means is connected to the band, the fitting means includes a support portion to which the other end of the elastic means is connected, wherein the adjustment means is configured to change a position of the support portion with respect to the certain point.

Also, in the helmet fitting system according to an embodiment of the present discourse, the elastic means is a tension spring, a band, rubber, or silicone.

Also, the helmet fitting system according to an embodiment of the present discourse further includes a third band connected to the fitting unit so that the fitting unit moves forward or backward with respect to the helmet, wherein uneven portions are formed on both side surfaces of the third band and are coupled to a fastening portion provided on the helmet.

Also, in the helmet fitting system according to an embodiment of the present discourse, the band includes a first band having one end fixed to one side of the helmet, and a second band having one end fixed to the other side of the helmet, wherein the fitting means includes a first fitting means connected to the other end of the first band, and a second fitting means connected to the other end of the second band.

Also, in the helmet fitting system according to an embodiment of the present discourse, the adjustment means is gear-coupled to the first and second fitting means.

Also, in the helmet fitting system according to an embodiment of the present discourse, the first fitting means and the second fitting means overlap each other in a direction perpendicular to a direction in which the elastic force of the fitting means is provided.

Also, in the helmet fitting system according to an embodiment of the present discourse, the contact member includes a base portion and a cover portion coupled to the base portion, wherein the contact member further includes a holder coupled to the base portion of the contact member and surrounding the first and second fitting means to expose one side of each of the first and second fitting means.

A method of manufacturing the helmet fitting system according to an embodiment of the present disclosure includes (A) coupling the holder to the base portion, (B) inserting the first and second fitting means into the holder, and (C) gear-coupling the adjustment means to the first and second fitting means by coupling the adjustment means to the holder.

The features and advantages of the present disclosure will become more apparent from the following detailed description based on the attached drawings.

Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

### [Advantageous Effects]

The present disclosure may eliminate the need for separate manipulation whenever a helmet is put on or taken off by providing a fitting unit configured to provide an elastic force toward the back of a wearer's head and may provide various elastic forces (pressures) desired by the wearer by providing an adjustment means configured to adjust the elastic force of the fitting unit.

### [Description of Drawings]

FIG. 1 is a perspective view illustrating a helmet fitting system according to an embodiment of the present disclosure.
FIG. 2 is an exploded perspective view illustrating a helmet fitting system according to an embodiment of the present disclosure.
FIGS. 3A and 3B are exploded perspective views illustrating a fitting unit and an adjustment means of a helmet fitting system according to an embodiment of the present disclosure.
FIGS. 4A and 4B are plan views illustrating a helmet fitting system according to an embodiment of the present disclosure.
FIG. 5 is a side view illustrating a helmet fitting system according to an embodiment of the present disclosure.
FIGS. 6A and 6B are plan views illustrating a helmet fitting system according to an embodiment of the present disclosure.
FIG. 7 is a side view illustrating a helmet fitting system according to an embodiment of the present disclosure.
FIGS. 8 to 10 are perspective views and a plan view illustrating a method of manufacturing a helmet fitting system according to an embodiment of the present disclosure.

### [Best Mode]

The objects, advantages, and features of the present disclosure will become more obvious from the following detailed description and preferred embodiments provided in relation to the accompanying drawings. In adding reference numerals to elements of each drawing in the specification, it should be noted that the same elements are denoted by the same reference numerals as much as possible even when they are shown on different drawings. Also, although the terms "first," "second," etc. may be used herein to describe various elements, these elements should not be limited by these terms. These terms are only used to distinguish one element from another. In the description of the present disclosure, detailed explanations of the related art are omitted when it is deemed that they may unnecessarily obscure the essence of the present disclosure.

Hereinafter, preferred embodiments of the present disclosure will be described in detail with reference to the accompanying drawings.

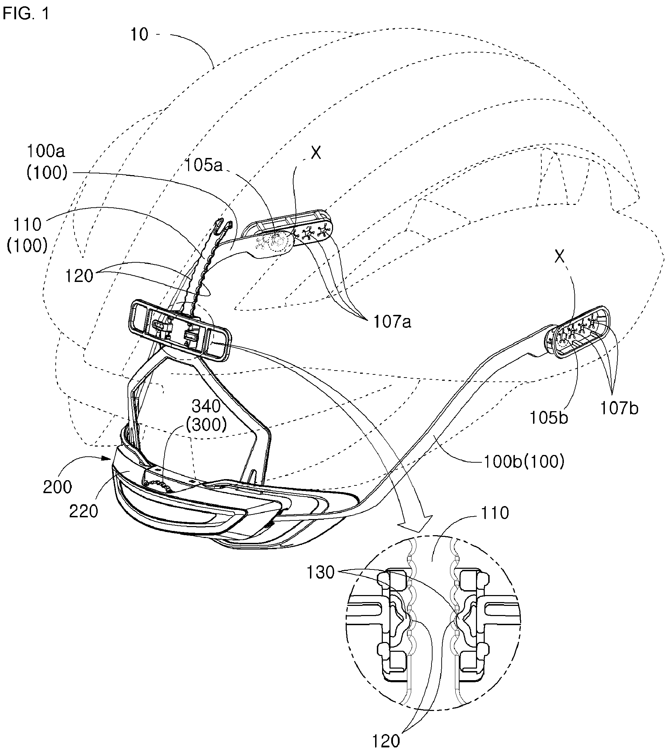

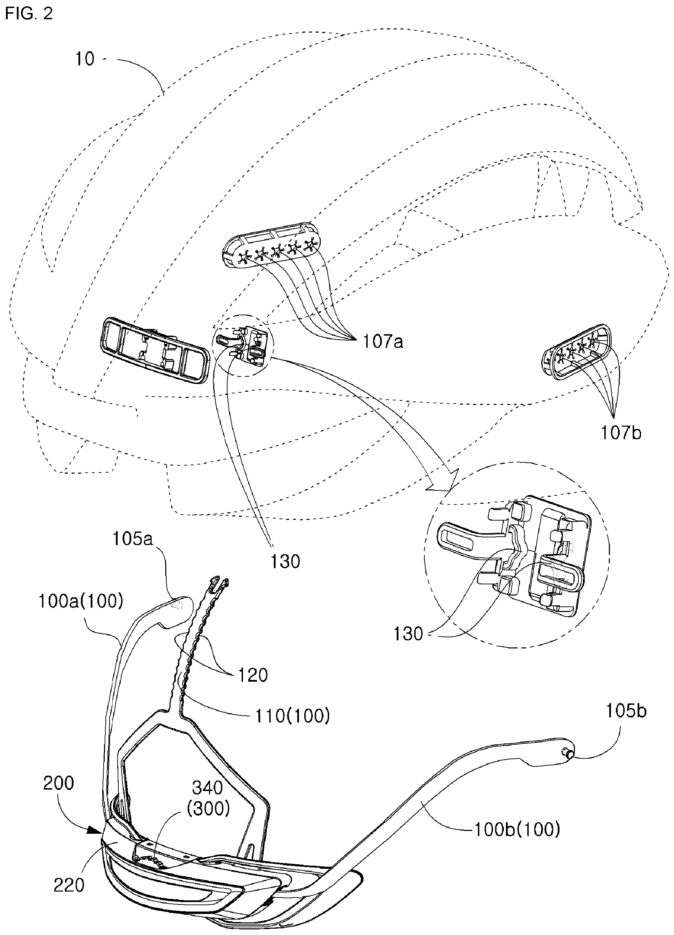

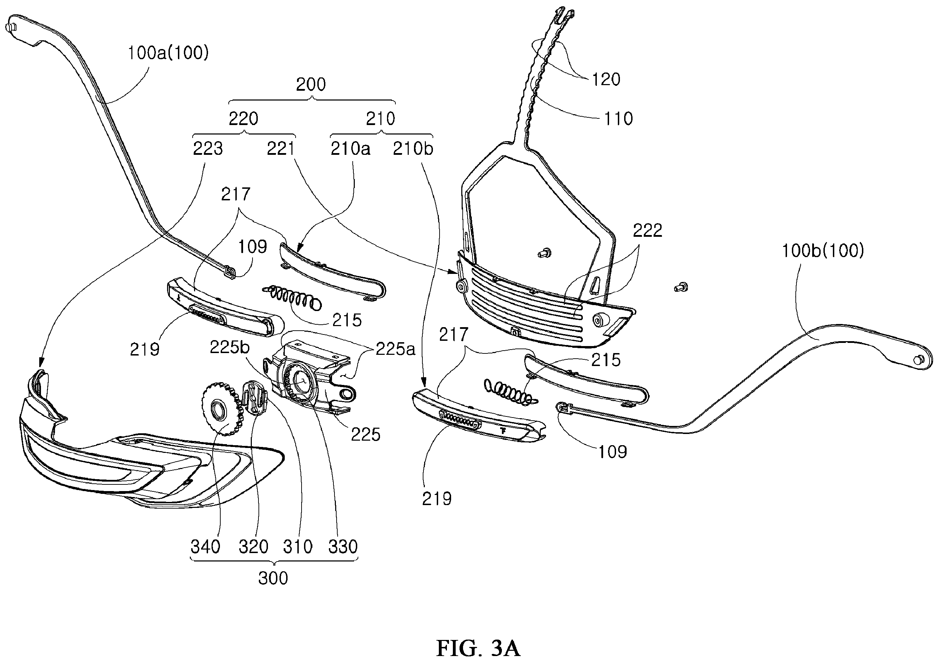

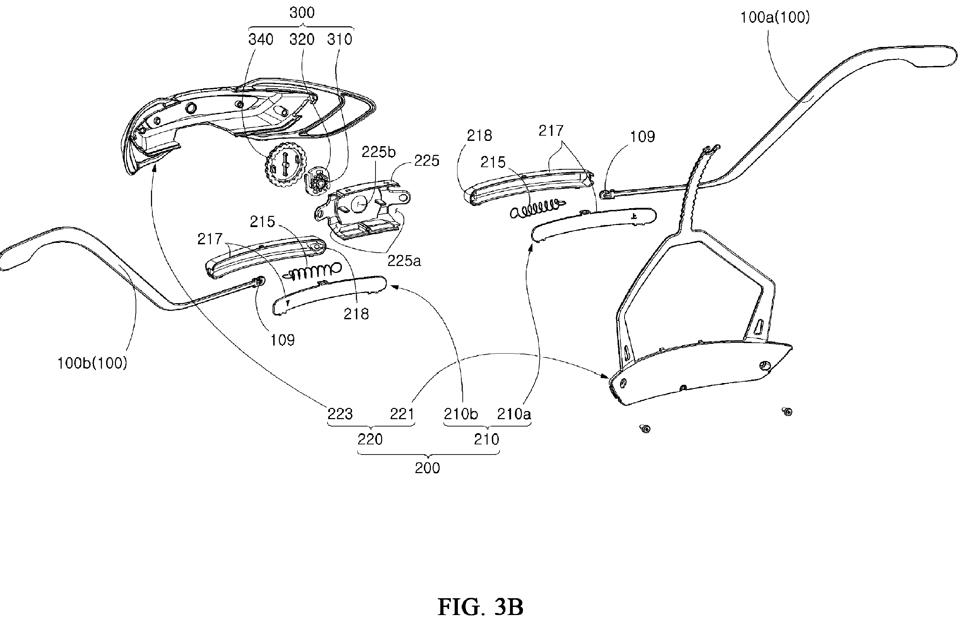

FIG. 1 is a perspective view illustrating a helmet fitting system according to an embodiment of the present disclosure. FIG. 2 is an exploded perspective view illustrating a helmet fitting system according to an embodiment of the present disclosure. FIGS. 3A and 3B are exploded perspective views illustrating a fitting unit and an adjustment means of a helmet fitting system according to an embodiment of the present disclosure.

As shown in FIGS. 1 to 3, a helmet fitting system according to the present embodiment includes a band 100 having one end fixed to a certain point X of a helmet 10, a fitting unit 200 connected to the band 100 and configured to provide an elastic force to the back of a wearer's head, and an adjustment means 300 configured to adjust the elastic force of the fitting unit 200.

The band 100 is supported on the fitting unit, and has one end fixed to the certain point X (see FIG. 1) of the helmet 10 and the other end connected to the fitting unit 200 through an elastic means 215 (see FIG. 3A). One pair of bands 100 are provided and fixed to both sides of the helmet 10. In detail, the band 100 may include a first band 100a having one end fixed to one side of the helmet 10 and a second band 100b having one end fixed to the other side of the helmet 10 (see FIGS. 1 and 2). For example, one end of the first band 100a may be fixed to the inside of the helmet 10 facing a left side of the wearer's head, and one end of the second band 100b may be fixed to the inside of the helmet 10 facing a right side of the wearer's head. In this case, one end of the first band 100a and one end of the second band 100b may be fixed at opposite positions. In addition, one end of the first band 100a and one end of the second band 100b do not have to be fixed only to fixed positions of the helmet 10, but may be fixed to the helmet 10 at two or more points with different distances from the fitting unit 200. That is, two or more points with different distances from the fitting unit 200 are provided on the inside of the helmet 10, and each of the first band 100a and the second band 100b is coupled at one of the two or more points. For example, when the first and second bands 100a, 100b are coupled at points relatively far from the fitting unit 200, the fitting unit 200 may be located relatively forward due to the first and second bands 100a, 100b. In contrast, when the first and second bands 100a, 100b are coupled at points relatively close to the fitting unit 200, the fitting unit 200 may be located relatively backward due to the first and second bands 100a, 100b. As such, when a position of the fitting unit 200 changes according to points at which the first and second bands 100a, 100b are coupled to the helmet 10, an elastic force provided from the fitting unit 200 toward the back of the head may also change. Also, a method of coupling the first and second bands 100a, 100b to the helmet 10 is not particularly limited, but a first protrusion 105a and a second protrusion 105b may respectively protrude from one end of the first band 100a and one end of the second band 100b, two or more first fastening holes 107a that are recessed and into which the first protrusion 105a is inserted may be provided inside the helmet 10, and two or more fastening holes 107b that are recessed and into which the second protrusion 105b is inserted may be provided inside the helmet 10. In this case, the first and second protrusions 105a, 105b and the first and second fastening holes 107a, 107b may be coupled to each other by using, for example, a snap method.

As shown in FIGS. 3A and 3B, the other end of the first band 100a may be connected to an elastic means 215 of a first fitting means 210a, and the other end of the second band 100b may be connected to an elastic means 215 of a second fitting means 210b. As a result, because one end of each of the first and second bands 100a, 100b is fixed to the certain point X of the helmet 10 and the other end of each of the first and second bands 100a, 100b is connected to the fitting unit 200 through the elastic means 215 (see FIGS. 3A and 3B), an elastic force may be provided from the fitting unit 200 toward the back of the wearer's head, which will be described below in detail.

The fitting unit 200 for providing the feeling of fitting to the wearer is connected to the band 100 to provide an elastic force toward the back of the wearer's head. Basically, the fitting unit 200 may be connected to the first and second bands 100a, 100b each fixed to the certain point X of the helmet 10, and may also be connected to a third band 110 fixed to a rear side of the helmet 10. As shown in FIGS. 3A and 3B, the fitting unit 200 may include two fitting means 210 and a contact member 220. The fitting means 210 may be connected to the band 100 to provide an elastic force to the band 100, and the contact member 220 is arranged so that two fitting means 210 are movable inside the contact member 220 and is in contact with the back of the wearer's head. For example, the contact member 220 may have a receiving space therein, and the two fitting means 210 may be arranged in the receiving space of the contact member 220 to slide along a longitudinal direction of the contact member 220.

In detail, the fitting means 210 may include the elastic means 215 and a support portion 217. The elastic means 215 is directly connected to the band to substantially provide an elastic force to the band 100. Also, the support portion 217 may be formed to accommodate the elastic means 215 therein, and the elastic means 215 may expand or contract inside the support portion 217. In this case, one end of the elastic means 215 may be connected to a first coupling portion 109 formed at the other end of the band 100, and the other end of the elastic means 215 may be connected to a second coupling portion 218 formed at an end of the support portion 217. As such, one end of the elastic means 215 may be connected to the first coupling portion 109 of the band 100 and the other end of the elastic means 215 may be connected to the second coupling portion 218 of the support portion 217 so that an elastic force of the elastic means 215 is provided to the band 100. Here, the elastic means 215 is not particularly limited as long as it may provide an elastic force, but may be, for example, a tension spring. However, this is only an example, and the elastic means 215 may be a band, rubber, or silicone.

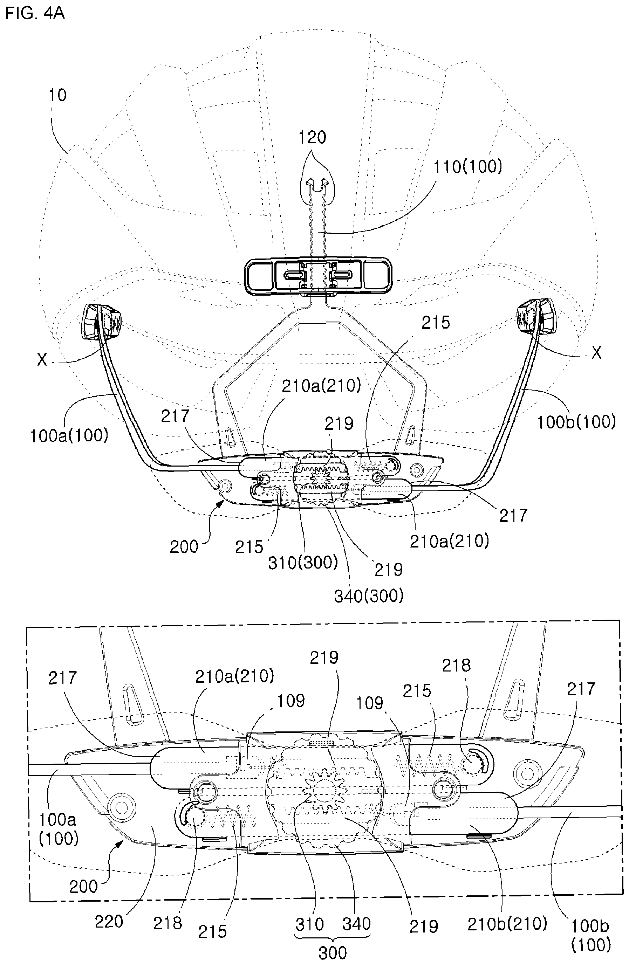

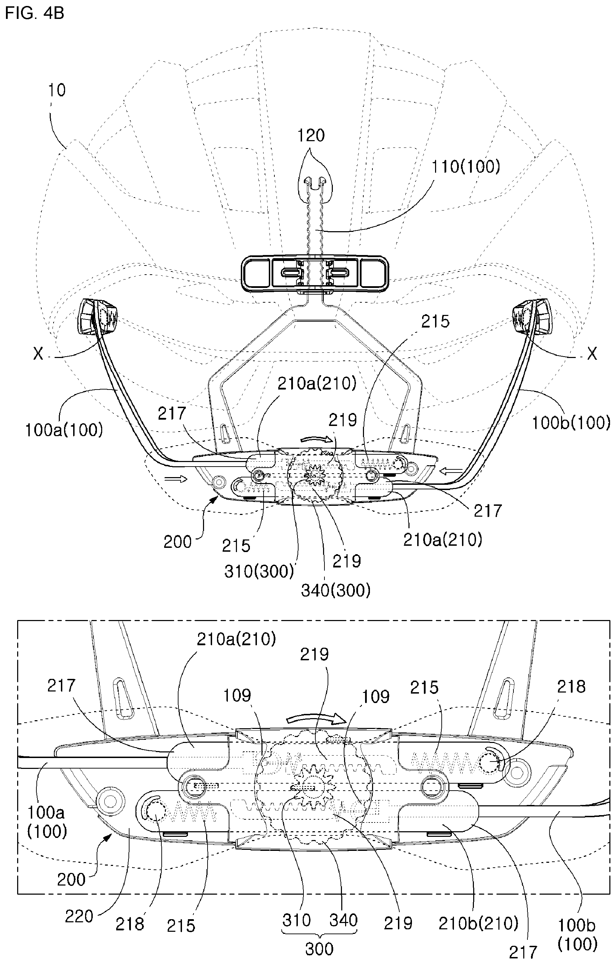

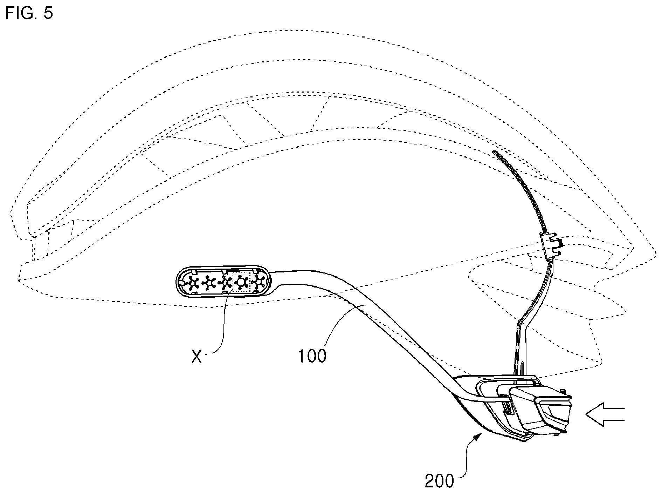

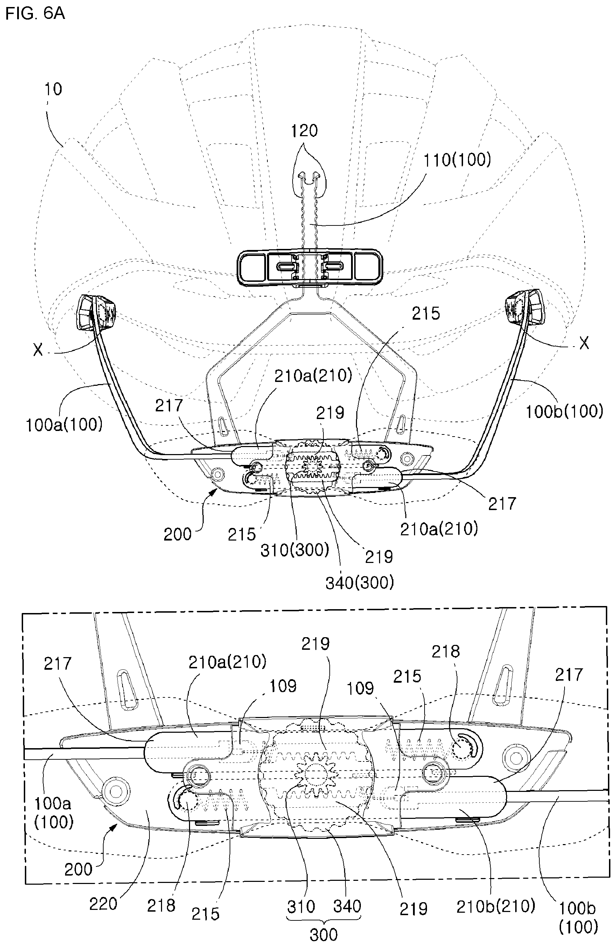

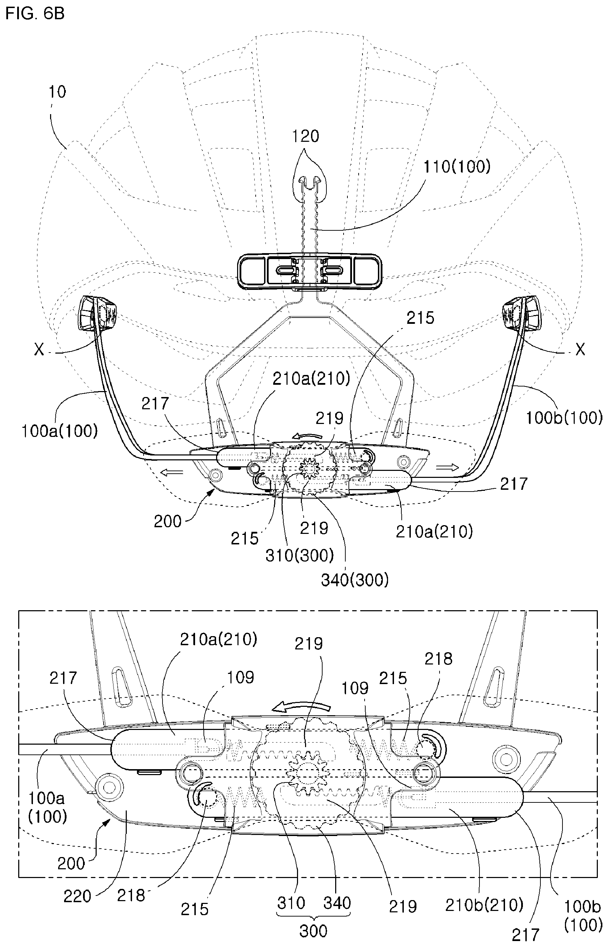

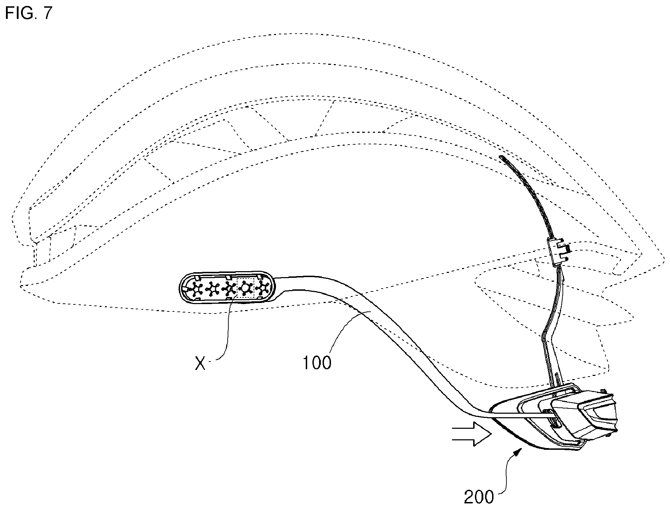

The adjustment means 300 for adjusting an elastic force of the fitting unit 200 may change a position of the fitting means 210 (the support portion 217) with respect to the certain point X of the helmet 10 to which the band 100 is fixed. In detail, as shown in FIGS. 4A and 4B, as the adjustment means 300 moves the fitting means 210 (the support portion 217) away from the certain point X, a tensile force applied to the elastic means 215 may increase, and the elastic means 215 of the fitting means 210 may relatively expand, thereby increasing an elastic force. As such, when an elastic force of the fitting means 210 (the elastic means 215) increases, an elastic force provided to the band 100 may increase, and thus, ultimately, as shown in FIG. 5, pressure applied by the fitting unit 200 to the back of the wearer's head may increase. In contrast, as shown in FIGS. 6A and 6B, when the adjustment means 300 moves the fitting means 210 (the support portion 217) closer to the certain point X, a tensile force applied to the elastic means 215 may decrease, and the elastic means 215 of the fitting means 210 may relatively contract, thereby reducing an elastic force. As such, when an elastic force of the fitting means 210 (the elastic means 215) decreases, an elastic force provided to the band 100 may decrease, and ultimately, as shown in FIG. 7, pressure applied by the fitting unit 200 to the back of the wearer's head may decrease. As a result, pressure applied by the fitting unit 200 to the back of the wearer's head may be adjusted by changing a position of the fitting means 210 by using the adjustment means 300.

The adjustment means 300 may be rotatably coupled to a holder 225 of the contact member 220 (see FIG. 3A), and may be gear-coupled to the support portion 217 of the fitting means 210 (see FIG. 4A). For example, a pinion gear 310 may be formed on the adjustment means 300, and a rack gear 219 may be formed on the support portion 217 of the fitting means 210, and the pinion gear 310 of the adjustment means 300 and the rack gear 219 of the support portion 217 may be gear-coupled to each other. Accordingly, when the adjustment means 300 rotates, the support portion 217 of the fitting means 210 may accordingly move relative to the contact member 220. As such, when the support portion 217 of the fitting means 210 moves, an elastic force of the elastic means 215 may change, and pressure applied by the contact member 220 to the back of the head may be adjusted.

As shown in FIGS. 3A and 3B, the adjustment means 300 may further include a latch portion 320 extending from the pinion gear 310, a gear portion 330 formed on the contact member 220 (the holder 225) to be coupled to the latch portion 320, and a manipulation portion 340 coupled to the latch portion 320 to rotate the latch portion 320. Basically, the latch portion 320 may be coupled to the gear portion 330 and the pinion gear 310 may be stopped without rotating arbitrarily so that the support portion 217 of the fitting means 210 is also stopped at a fixed position. However, when the wearer rotates the manipulation portion 340, the latch portion 320 and the pinion gear 310 may rotate together, and thus, the support portion 217 of the fitting means 210 may move relative to the contact member 220.

### [Mode for Invention]

As described above, because the band 100 may include the first and second bands 100a, 100b, the fitting means 210 may also include first and second fitting means 210a, 210b. The other end of the first band 100a may be connected to the elastic means 215 of the first fitting means 210a, and the other end of the second band 100b may be connected to the elastic means 215 of the second fitting means 210b.

As shown in FIG. 4A, the adjustment means 300 may be gear-coupled to the first and second fitting means 210a, 210b. For example, the first fitting means 210a and the second fitting means 210b may overlap each other in a direction (up-down direction) perpendicular to a direction in which an elastic force of the fitting means 210 is provided. In this case, the pinion gear 310 of the adjustment means 300 may be located between the first fitting means 210a and the second fitting means 210b. Accordingly, the pinion gear 310 of the adjustment means 300 may be simultaneously gear-coupled to the rack gear 219 of the first fitting means 210a and the rack gear 219 of the second fitting means 210b. As a result, when the pinion gear 310 rotates, the first and second fitting means 210a, 210b gear-coupled to the pinion gear 310 may simultaneously move.

The contact member 220 will be described in more detail with reference to FIGS. 3A and 3B. The contact member 220 may include a base portion 221 and a cover portion 223 coupled to the base portion 221. In this case, there may be a receiving space inside the base portion 221 and the cover portion 223, and the support portion 217 of the fitting means 210 may move while sliding inside the receiving space. One surface of the support portion 217 of the fitting means 210 may contact one surface of the base portion 221. Accordingly, in order for one surface of the support portion 217 of the fitting means 210 to smoothly slide along one surface of the base portion 221, one surface of the support portion 217 of the fitting means 210 may extend to have a curvature corresponding to a curvature of one surface of the base portion 221. In addition, in order to guide sliding of the support portion 217 of the fitting means 210, a guide portion 222 (see FIG. 3A) protruding by extending long in a sliding direction of the support portion 217 of the fitting means 210 may be formed on one surface of the base portion 221.

Also, the holder 225 may be provided on the contact member 220. The holder **225 may** be coupled to the base portion 221 of the contact member 220, and may surround the first and second fitting means 210a, 210b to expose one side (end) of each of the first and second fitting means 210a, 210b. For example, the holder 225 may be formed in a ' 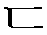 ' shape to surround the first and second fitting means 210a, 210b, and openings 225a may be formed on both sides of the holder 225 to expose one side (end) of each of the first and second fitting means 210a, 210b. Also, a fastening hole 225b may be formed on one side (rear side) of the holder 225, and the pinion gear 310 of the adjustment means 300 may be rotatably coupled to the fastening hole 225b.

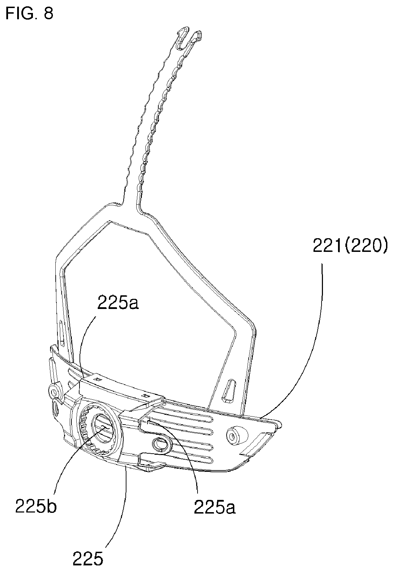

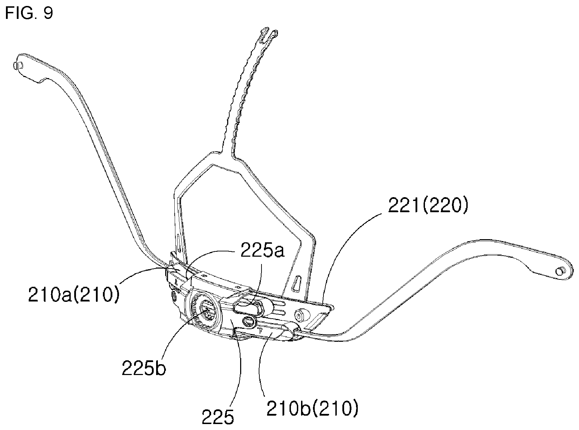

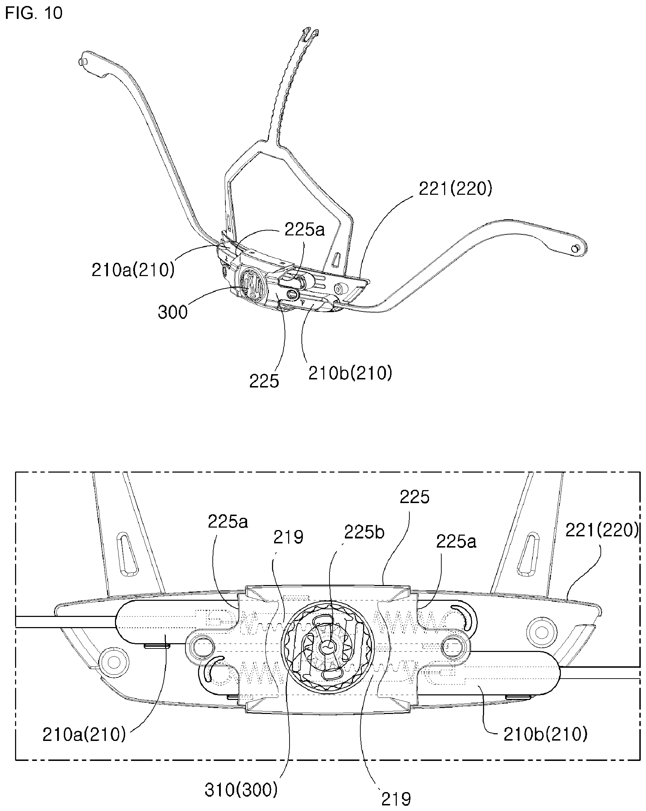

The holder 225 may be utilized in a method of manufacturing a helmet fitting system according to the present disclosure. The method of manufacturing a helmet fitting system according to the present disclosure will be described in detail. First, as shown in FIG. 8, the holder 225 is coupled to the base portion 221. Next, as shown in FIG. 9, the first and second fitting means 210a, 210b are inserted into the holder 225 through the openings 225a formed on both sides of the holder 225. Next, as shown in FIG. 10, the adjustment means 300 is coupled to the fastening hole 225b of the holder 225, and the pinion gear 310 of the adjustment means 300 is gear-coupled to the rack gears 219 of the first and second fitting means 210a, 210b. In this case, because one side (end) of each of the first and second fitting means 210a, 210b is exposed from the holder 225, an assembler may check positions of the first and second fitting means 210a, 210b, and when the first and second fitting means 210a, 210b are at correct positions, the pinion gear 310 of the adjustment means 300 may be coupled to the rack gears 219 of the first and second fitting means 210a, 210b.

Additionally, as shown in FIGS. 1 and 2, the band 100 may further include the third band 110. The third band 110 may be connected to the fitting unit 200, may extend to a rear inner side of the helmet 10, and may be coupled to the inside of the helmet 10. According to the movement of the third band 110, the fitting unit 200 may move forward or backward with respect to the helmet 10. **In** this case, the third band 110 may be coupled to a fastening portion 130 (see an enlarged diagram of FIG. 2) formed inside the helmet 10. **In** detail, uneven portions 120 may be continuously formed on both side surfaces of the third band 110, and the uneven portions 120 may be coupled to the fastening portion 130 provided on the helmet 10 so that the third band 110 is fixed at a specific position.

**In** a helmet fitting system according to the prior art, an uneven portion is formed on a bottom surface of a band (an element corresponding to the third band). Accordingly, when a curvature of the band changes according to a shape of the helmet, a gap between a concave portion and a convex portion of the uneven portion changes, thereby causing a wearer to have a different feeling of manipulation. **In** addition, in the helmet fitting system according to the present embodiment, because an elastic force is applied to the fitting unit 200, a curvature change of the third band 110 may become more severe. However, in the helmet fitting system according to the present embodiment, because the uneven portions 120 are formed on both side surfaces of the third band 110, a gap between a concave portion and a convex portion of the uneven portion 120 hardly changes according to a curvature change of the third band 110, thereby maintaining the wearer's feeling of manipulation at a constant level.

As described above, because the fitting unit 200 is connected to the first and second bands 100a, 100b through the elastic means 215, an elastic force may be provided toward the back of the wearer's head. Accordingly, whenever the wearer puts on or takes off the helmet 10, the elastic means 215 of the first and second fitting means 210a, 210b may expand and the fitting unit 200 may move backward. Accordingly, the wearer may easily put on and take off the helmet 10 without separate manipulation. Also, because an elastic force is provided from the fitting unit 200 toward the back of the wearer's head when the wearer puts on the helmet 10, the contact member 220 of the fitting unit 200 may contact the back of the wearer's head, thereby preventing the helmet 10 from being taken off arbitrarily and providing a comfortable fit to the wearer.

In addition, by moving the fitting means 210 (the support portion 217) away from the certain point X of the helmet 10 at which the band 100 is fixed by using the adjustment means 300 (see FIGS. 4A and 4B), an elastic force of the fitting means 210 (the fitting means 215) may be increased and pressure applied by the fitting unit 200 (the contact member 220) to the back of the wearer's head may be increased. In contrast, by moving the fitting means 210 (the support portion 217) closer to the certain point X of the helmet 10 at which the band 100 is fixed by using the adjustment means 300 (see FIGS. 6A and 6B), an elastic force of the fitting means 210 (the elastic means 215) may be reduced and pressure applied by the fitting unit 200 (the contact member 220) to the back of the wearer's head may be reduced. As a result, the wearer may adjust an elastic force of the fitting means 210 (the elastic means 215) by manipulating the adjustment means 300 to provide various elastic forces (pressures) desired by the wearer.

While the present disclosure has been described in detail with reference to the specific exemplary embodiments for specifically explaining the present disclosure, the present disclosure is not limited to the exemplary embodiments, and it is apparent that the alteration or modification may be made by one of ordinary skill in the art without departing from the technical spirit of the present disclosure.

The simple alteration or modification of the present disclosure are within the scope of the present disclosure, and the specific protection scope of the present disclosure may be clearly defined by the appended claims.

### [Description of Reference Numerals]

| | | | |
|---|---|---|---|
| 10: | helmet | 100: | band |
| 100a: | first band | 105a: | first protrusion |
| 107a: | first fastening hole | 100b: | second band |
| 105b: | second protrusion | 107b: | second fastening hole |
| 109: | first coupling portion | 110: | third band |
| 120: | uneven portion | 130: | fastening portion |
| 200: | fitting unit | 210: | fitting means |
| 210a: | first fitting means | 210b: | second fitting means |
| 215: | elastic means | 217: | support portion |
| 218: | second coupling portion | 219: | rack gear |
| 220: | contact member | 221: | base portion |
| 222: | guide portion | 223: | cover portion |
| 225: | holder | 225a: | opening |
| 225b: | fastening hole | 300: | adjustment means |
| 310: | pinion gear | 320: | latch portion |
| 330: | gear portion | 340: | manipulation portion |
| X: | certain point | | |

### [Industrial Applicability]

The present disclosure provides a helmet fitting system and a manufacturing method therefor which may eliminate the need for separate manipulation whenever a helmet is put on or taken off by providing a fitting unit configured to provide an elastic force toward the back of a wearer's head and may provide various elastic forces (sense pressures) desired by the wearer by providing an adjustment means configured to adjust the elastic force of the fitting unit.

## Claims

1. A helmet fitting system comprising:
a band having one end fixed to a certain point of a helmet;
a fitting unit connected to the band and configured to provide an elastic force to the back of a wearer's head; and
an adjustment means configured to adjust the elastic force of the fitting unit.

2. The helmet fitting system according to claim 1, wherein the fitting unit comprises:
a fitting means connected to the band and configured to provide an elastic force to the band; and
a contact member arranged so that the fitting means is movable, the contact member being in contact with the back of the wearer's head,
wherein the adjustment means is configured to change a position of the fitting means with respect to the certain point.

3. The helmet fitting system according to claim 2, wherein,
when the adjustment means moves the fitting means away from the certain point, the elastic force of the fitting means increases, and
when the adjustment means moves the fitting means closer to the certain point, the elastic force of the fitting means decreases.

4. The helmet fitting system according to claim 2, wherein the adjustment means is gear-coupled to the fitting means.

5. The helmet fitting system according to claim 4, wherein
a pinion gear is formed on the adjustment means, and
a rack gear coupled to the pinion gear is formed on the fitting means.

6. The helmet fitting system according to claim 2, wherein the adjustment means is coupled to the contact member.

7. The helmet fitting system according to claim 2, wherein the fitting means comprises an elastic means connected to the band.

8. The helmet fitting system according to claim 7, wherein, when one end of the elastic means is connected to the band, the fitting means comprises a support portion to which the other end of the elastic means is connected,
wherein the adjustment means is configured to change a position of the support portion with respect to the certain point.

9. The helmet fitting system according to claim 7, wherein the elastic means is a tension spring, a band, rubber, or silicone.

10. The helmet fitting system according to claim 1, further comprising a third band connected to the fitting unit so that the fitting unit moves forward or backward with respect to the helmet,
wherein uneven portions are formed on both side surfaces of the third band and are coupled to a fastening portion provided on the helmet.

11. The helmet fitting system according to claim 2, wherein the band comprises:
a first band having one end fixed to one side of the helmet; and
a second band having one end fixed to the other side of the helmet,
wherein the fitting means comprises:
a first fitting means connected to the other end of the first band; and
a second fitting means connected to the other end of the second band.

12. The helmet fitting system according to claim 11, wherein the adjustment means is gear-coupled to the first and second fitting means.

13. The helmet fitting system according to claim 11, wherein the first fitting means and the second fitting means overlap each other in a direction perpendicular to a direction in which the elastic force of the fitting means is provided.

14. The helmet fitting system according to claim 11, wherein the contact member comprises a base portion and a cover portion coupled to the base portion,
wherein the contact member further comprises a holder coupled to the base portion of the contact member and surrounding the first and second fitting means to expose one side of each of the first and second fitting means.

15. A method of manufacturing the helmet fitting system according to claim 14, the method comprising:
(A) coupling the holder to the base portion;
(B) inserting the first and second fitting means into the holder; and
(C) gear-coupling the adjustment means to the first and second fitting means by coupling the adjustment means to the holder.
